# EUROPEAN PATENT SPECIFICATION

(11) **EP 3 698 620 B1**
(45) Date of publication and mention of the grant of the patent: **31.08.2022**
(21) Application number: 20158513.0
(22) Date of filing: 20.02.2020
(51) Int. Cl.: A01D 34/00, B60L 53/36, G05D 1/02

(54) **UTILITY SYSTEM AND METHOD OF CHARGING A UTILITY VEHICLE**
VERSORGUNGSSYSTEM UND VERFAHREN ZUM LADEN EINES NUTZFAHRZEUGS
SYSTÈME UTILITAIRE ET PROCÉDÉ DE CHARGEMENT D'UN VÉHICULE UTILITAIRE

(30) Priority: 20.02.2019 GB 201902334
(43) Date of publication of application: 26.08.2020
(73) Proprietor: Honda Motor Europe Ltd., Bracknell, Berkshire RG12 1HL (GB)
(72) Inventor: VAN GAMEREN, Berend Hendrik, 1704 Heerhugowaard (NL)
(74) Representative: Dehns

(56) References cited:
- DE-A1- 2 912 601
- SE-A1- 1 750 495
- US-A- 3 038 970
- US-A1- 2016 000 005

## Description

### Field

The invention provides a utility system comprising a utility vehicle, a utility system component for a utility system, and a method of charging a utility vehicle.

### Background

A known utility system is used to cut the grass within a predetermined area (e.g. a working area) of a lawn. The utility system includes a robotic lawn mower that navigates within the predetermined area and cuts the grass therein. A wire loop is provided to surround and define the predetermined area, and an electric current is passed around the wire loop in order to generate a magnetic field. The robotic lawn mower is provided with sensors for detecting magnetic fields and can therefore navigate within the predetermined area. Included in the wire loop is a charging station at which the robotic lawn mower can dock and charge. The charging station is therefore provided on or adjacent the working area, which may then leave the utility vehicle and charging station visible and/or exposed to possible damage.

An example of a known utility system is described in European patent application EP 3 225 454 A1. United States patent application US 2017/0285652 A1 discloses an apparatus for controlling a known utility system. US 2016/0000005 A1 and SE 1 750 495 A1 disclose a robotic work tool systems, each comprising a charging station, a boundary wire and a signal generator for generating and transmitting a signal through the boundary wire. DE 29 12 601 A1 and US 3 038 970 A relate to vehicle guidance systems using current-carry guide wires.

Known utility systems are generally considered suitable for their intended purposes. However, once installed they cannot readily be modified, nor can they be readily adapted for use with different lawns or working areas. A single utility vehicle operates from a single charging station inside a working area. Further, the utility vehicle and charging system may be inside the working area proximate to its edge, and hence visually and environmentally exposed. It is therefore desirable to provide improvements to known utility systems e.g. for increasing their adaptability.

### Summary

According to a first aspect of the invention there is provided a utility system comprising: a boundary wire loop arranged to carry an electric current and generate a first magnetic field, wherein the boundary wire loop defines a working area; a utility vehicle configured to move within the working area and to detect magnetic fields to assist its navigation; and a charging system comprising: a charging station for receiving and charging the utility vehicle; and a charging station wire loop arranged to carry an electric current and generate a second magnetic field, wherein a portion of the charging station wire loop is disposed parallel and adjacent to a portion of the boundary wire loop such that when current flows in both wire loops the respective magnetic fields from the parallel and adjacent portions are substantially cancelled, so that during use the utility vehicle does not detect a magnetic field in the region of the portion of the boundary wire loop adjacent the portion of the charging station wire loop and therefore exits the working area in order to access the charging station; and wherein the charging system is configured so that electric current is provided to the charging station wire loop to generate the second magnetic field if the charging station is capable of receiving and charging the utility vehicle.

The utility vehicle is configured to move within the working area defined by the boundary wire loop (and may be configured to work within the working area). When a charging station is capable of receiving and charging the utility vehicle (e.g. because it is not already charging a utility vehicle), the charging system is configured to provide an electric current to the charging station wire loop. This generates the second magnetic field to cause cancellation of the respective magnetic field from the adjacent portion of the boundary wire loop. The utility vehicle can therefore exit the working area in order to access the charging station for charging.

The system may be arranged so that the flow of current in the charging station wire loop is in an opposite direction to the flow of current in the boundary wire loop in the adjacent portions of the loops. The magnetic fields generated by the adjacent portions of the loops substantially cancel one another so that the utility vehicle does not detect a magnetic field in that region and hence does not detect the portion of the boundary wire loop adjacent the portion of the charging station wire loop. The substantial cancellation of the magnetic fields of the respective portions of the wire loops can be achieved as a consequence of physical law.

In embodiments, the utility vehicle is an automated, robotic utility vehicle that navigates and moves within the working area defined by the boundary wire loop. It is configured to detect magnetic fields and hence can detect the first magnetic field generated by the boundary wire loop. The utility vehicle may therefore be capable of detecting the location of the boundary wire loop and hence navigating within the working area and staying within the bounds of the working area defined by the boundary wire loop. The utility vehicle may therefore service the working area as it moves therein. For example, the utility vehicle may be a robotic lawn mower configured to cut grass and the working area may be a lawn, a park, a sports pitch and so on.

In embodiments, a signal is sent to the charging station wire loop if and only if the charging station is capable of receiving and charging a utility vehicle. No signal is sent if the charging station is not capable of receiving and charging a utility vehicle, for example when the charging station is charging another utility vehicle or is otherwise occupied. Thus, when the charging station is occupied (and therefore not capable of receiving a utility vehicle) no electric current is provided to the charging station wire loop and the magnetic field in the region of the portion of the boundary wire loop is not substantially cancelled and the utility vehicle may detect the magnetic field in that region, may not exit the working area, and hence may not access the charging station.

The charging system may be outside the working area, and the charging station may be outside the working area. The charging station wire loop may define a charging area outside the working area so that the utility vehicle must cross the boundary wire loop to reach the charging station. The charging station may be accessible to the utility vehicle from within the charging station wire loop.

The utility vehicle may comprise any suitable energy source for its movement, which source may be replenished at the charging station. Preferably the utility vehicle comprises a battery that may be charged at the charging station.

The charging station may charge one and only one utility vehicle at a time. There may be only one charging station per charging system, and only one charging station wire loop per charging system.

The boundary wire loop and the charging station wire loop may be closed loops and therefore electric current may circulate in each loop. Electric current circulating in a wire loop generates a predetermined magnetic field according to known physical laws.

The utility system may be configured to be used outdoors and may be weatherproof, waterproof, sealed against ingress of particulates and so on. Portions of the utility system may be configured to be buried, for example the boundary wire loop and/or charging station wire loop may be configured so that in use they can be buried e.g. below the perimeter of a lawn or sports pitch. Thus, the wire loops may be buried below the surface of a lawn or other working area to be out of sight and/or to be protected to some degree from weather or accidental damage.

The utility vehicle may be configured to approach the charging station by tracing the boundary wire loop by detecting the magnetic field generated thereby until it reaches the charging station. The utility vehicle may be configured to detect the charging station when it is within a predetermined distance therefrom. The utility vehicle may be configured to navigate to and interface with the charging station so as to occupy and/or charge from the charging station when it is a predetermined distance therefrom.

Thus, when the charging station is vacant and providing electric current to the charging station wire loop, the magnetic field generated by the portion of the charging station wire loop adjacent the portion of the boundary wire loop will substantially cancel the magnetic field generated by the adjacent portion of the boundary wire loop and the utility vehicle will not detect a magnetic field in that region as it approaches that region while tracing the boundary wire loop. Hence, the utility vehicle will cross the boundary wire loop in that region to access the charging station. Thus, the utility vehicle may follow the boundary wire loop and encounter the charging station only if the charging station is capable of charging the utility vehicle. If the utility vehicle first approaches a charging station while tracing the boundary wire loop and no current is being provided to the charging station wire loop (e.g. because the charging station is charging another utility vehicle and/or is faulty), then the magnetic field generated by the portion of the boundary wire loop adjacent the charging station wire loop portion will not be substantially cancelled by a magnetic field from the charging station wire loop and the utility vehicle will continue to follow the boundary wire loop past the charging system.

The utility vehicle may approach the charging station by navigating directly towards a charging station (for example by recording the location of the last used charging station), and then tracing the boundary wire loop if it encounters that before the charging station, at which point it may trace the boundary wire loop until it reaches an available charging station. The utility vehicle may approach the charging station by first approaching the boundary wire loop and tracing that until it reaches an available charging station. Once the utility vehicle is close enough to a charging station, it may be configured to detect that charging station and navigate towards it and interface with it in order to charge. That is, once the utility vehicle is close enough to a charging station it may be configured to dock with the charging station for charging.

The utility vehicle may be configured to approach the charging station when a predetermined condition is satisfied. The predetermined condition may be the utility vehicle having less than a certain amount of power left, and/or may be the elapse of a certain about of time since starting operation, and/or may be a particular time of day etc. Therefore, upon the predetermined condition being satisfied the utility vehicle may be configured to remove itself from the working area. Any suitable number of predetermined conditions may be provided. The utility vehicle may be configured to approach the charging station only when a predetermined condition is satisfied and otherwise to continue servicing the work area.

The utility system may comprise a plurality of utility vehicles. Each utility vehicle may be configured as described herein and hence may operate in substantially the same manner. Each utility vehicle may be configured to move within the working area and to detect magnetic fields and navigate thereby. The utility system may comprise a plurality of charging systems. Each charging system may be substantially as described herein. That is, each charging system may comprise: a charging station for receiving and charging the utility vehicle (or any of the plurality of utility vehicles); and a charging station wire loop arranged to carry an electric current and generate a second magnetic field, wherein a portion of the charging station wire loop is disposed adjacent a portion of the boundary wire loop such that when current flows in both wire loops the respective magnetic fields from the adjacent portions are substantially cancelled, and wherein the charging system is configured so that electric current is provided to the charging station wire loop to generate the second magnetic field unless the charging station is occupied (e.g. by one of the plurality of utility vehicles). Therefore, the utility system may comprise a first charging system comprising a first charging station and a first charging station wire loop, a second charging system comprising a second charging station and a second charging station wire loop, and so on. The utility system may comprise a first utility vehicle, the second utility vehicle, and so on.

The utility system described herein enables the use of a plurality of utility vehicles in a single working area. Each utility vehicle may autonomously seek out an available charging station for charging (for example upon a predetermined condition being satisfied) and will be able to access the charging station only if it is available to charge the utility vehicle. In the case that the utility vehicle approaches a charging station that is e.g. occupied by another utility vehicle, the approaching utility vehicle will instead encounter the boundary wire loop (i.e. the magnetic field generated thereby) and may then follow the boundary wire loop until it encounters an available charging station.

The utility system may comprise an equal number of utility vehicles and charging systems. Therefore, a charging station may be available for each utility vehicle such that all utility vehicles may be outside the working area at the same time. Alternatively the utility system may comprise a greater number of utility vehicles than charging systems, such that utility vehicles may take turns charging at the charging stations. Alternatively the utility system may comprise a greater number of charging systems than utility vehicles, such that a charging station will be readily available for a utility vehicle if and when it is needed.

The plurality of charging systems may be spaced from each other around the boundary wire loop. The charging systems may be evenly spaced around the boundary wire loop so that a utility vehicle at any location within the working area may be near at least one charging station. The charging stations may be concentrated at a section of the boundary wire loop, for example at one end of the working area which may be out of sight and/or out of the way.

As noted above, the utility vehicle may be a lawnmower. The working area may be a lawn, a park, a sports pitch, or any area having grass which needs to be cut. When a plurality of utility vehicles and a plurality of charging systems are provided the invention allows servicing (e.g. grass cutting) of a larger working area in a shorter period of time than is possible using systems according to the prior art because multiple utility vehicles can simultaneously operate within the working area.

The utility system may comprise a boundary controller arranged to supply the electric current to the boundary wire loop to generate the first magnetic field. The utility system may not comprise a charging station associated with the boundary wire loop. There may not be a charging station electrically connected to the boundary wire loop. The boundary wire loop may operate independently of any and all of the charging systems. All of the charging systems may operate independently of the boundary wire loop.

The electric current may be provided to the charging station wire loop in the form of the signal and may be provided by a charging station controller and/or a utility system controller or the like. The electric current may be provided to the boundary wire loop in the form of the signal and may be provided by the boundary controller and/or utility system controller or the like. The utility system, the charging system, and/or the boundary controller may be configured to provide electric currents and/or signals to respective wire loops that complement the signals in the other wire loops in the system such that magnetic fields from adjacent portions of wire loops substantially cancel. That is, each component of the system may be configured to operate in concert with the other components.

There is provided a utility system component comprising: a wire loop for defining a working area, the wire loop arranged in use to carry an electric current and generate a magnetic field for detection by a utility vehicle; and a controller for providing the electric current to the wire loop; wherein the utility system component does not comprise a charging station for a utility vehicle.

The wire loop may be suitable for defining a working area for a utility vehicle about a lawn, a park, and/or a sports pitch or the like. The utility system component may be weatherproof, waterproof and/or sealed against ingress of particulates, and as such may be configured to be used outdoors. The utility system component may be configured to be buried in the ground, particularly the wire loop of the utility system component may be configured to be buried in the ground, for example below the surface of a perimeter of a lawn. The utility system component may comprise a power supply, which power supply may comprise a battery and/or a plug connection for e.g. mains power or the like.

The utility system component may be configured to be used with the utility system described above with reference to the first aspect. The wire loop of the utility system component may be configured to provide the boundary wire loop of the utility system. The controller may be configured to provide a signal to the wire loop, which signal may be predetermined so as to cause substantial cancellation of the magnetic field in a region of a portion of the wire loop adjacent a portion of a charging station wire loop of the utility system.

According to a second aspect of the invention there is provided a method of charging a utility vehicle, comprising: providing a boundary wire loop arranged to carry an electric current, wherein the boundary wire loop defines a working area; providing a utility vehicle configured to move within the working area and to detect magnetic fields and navigate thereby; providing a charging system comprising: a charging station for receiving and charging the utility vehicle; and a charging station wire loop arranged to carry an electric current, wherein a portion of the charging station wire loop is disposed parallel and adjacent to a portion of the boundary wire loop; providing an electric current to the boundary wire loop so as to generate a first magnetic field thereby; providing an electric current to the charging station wire loop so as to generate a second magnetic field thereby and substantially cancel the magnetic field in the region of the parallel and adjacent wire loop portions if the charging station is capable of receiving and charging the utility vehicle so that during use the utility vehicle does not detect a magnetic field in the region of the portion of the boundary wire loop adjacent the portion of the charging station wire loop and therefore exits the working area in order to access the charging station.

The method may comprise not providing an electric current to the charging station wire loop if the charging station is not capable of receiving and charging the utility vehicle. Therefore, the method may comprise allowing the utility vehicle to access the charging station only if the charging station is available to charge the utility vehicle.

The method may comprise controlling the utility vehicle to approach the charging station by tracing the boundary wire loop by detecting the magnetic field generated thereby until it reaches the charging station. The method may comprise controlling utility vehicle to navigate directly towards the charging station and to dock with the charging station unless it first encounters the boundary wire loop.

The method may comprise controlling the utility vehicle to approach the charging station when a predetermined condition is satisfied. The method may comprise controlling utility vehicle to approach the charging station only when a predetermined condition is satisfied.

The method may comprise providing a plurality of utility vehicles. Each of the utility vehicles may be substantially described as herein. The method may comprise providing a plurality of charging systems. Each of the charging systems may be substantially as described herein. The method may include servicing the working area using a plurality of utility vehicle simultaneously.

The method may comprise providing an equal number of utility vehicles and charging systems. The method may comprise providing more utility vehicles than charging systems. The method may comprise providing fewer utilities vehicles and charging systems.

The method may comprise using and/or providing a utility system as described herein with respect to the first aspect of the invention, or using and/or providing a utility system component as described herein. The method may comprise using and/or providing any and all of the features of the first aspect of the invention and/or the utility system component as described herein.

In view of the foregoing, it will be appreciated that certain preferred embodiments of the present invention provide various advantages over known utility systems. The provision of a charging system separate from the boundary wire allows increased adaptability of the utility system. For example, the charging system may be relocated at times to prevent damage to patches of grass beneath it. Moreover, in embodiments, additional charging stations and/or utility vehicles may be added to the utility system as needed, thereby reducing the time needed to service a working area and allowing larger working areas to be serviced. Since the boundary wire loop is separate from the charging stations, a user may upgrade a known utility system (e.g. comprising a single utility vehicle and charging station) by e.g. converting it to a charging system of the present invention and adding a boundary wire loop, thereby increase adaptability of their existing system. The charging station may be provided outside the working area so that once a utility vehicle has completed servicing it can move out of the working area. For example, once the grass of a football pitch has been cut, a utility vehicle may then move to a charging station off the pitch so as not to present an obstruction to players or a distraction to spectators.

### Figures

Certain preferred embodiments of the invention are described below by way of example only and with reference to the figures wherein:
Figure 1 shows a schematic view of a utility system comprising a utility vehicle, a boundary wire loop, and a charging system;
Figure 2 shows the utility system of Figure 1 with the utility vehicle following the boundary wire loop;
Figure 3 shows the utility system of Figure 2 with the utility vehicle moving to dock with the charging system;
Figure 4 shows the utility system of Figure 3 with the utility vehicle docked with the charging system;
Figure 5 shows a schematic of utility system comprising a plurality of utility vehicles a boundary wire loop and a plurality of charging systems;
Figure 6 shows the utility system of Figure 5 with a moving utility vehicle passing and occupied charging system; and
Figure 7 shows the utility system of Figure 6 with the moving utility vehicle having docked at the available charging system.

### Description

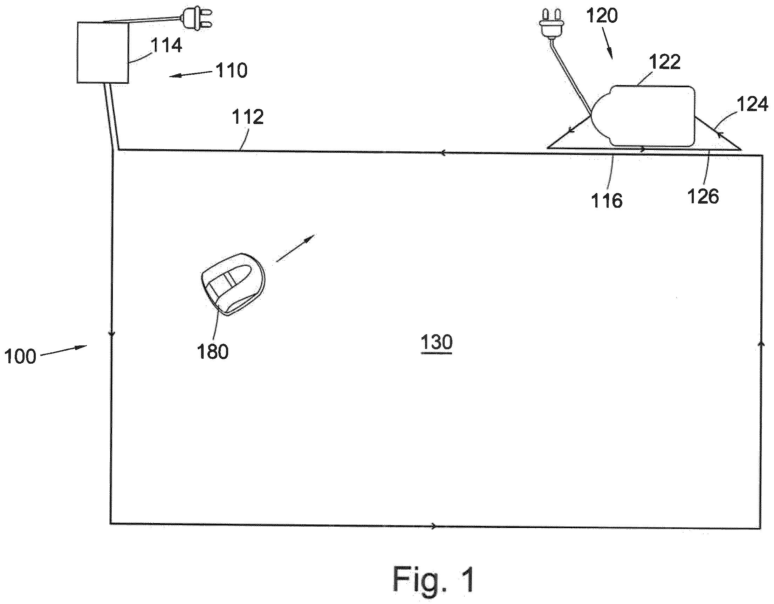

Figure 1 shows a utility system 100 comprising a utility system component 110, a charging system 120 and a utility vehicle 180. The utility system component 110 comprises a boundary wire loop 112 surrounding and defining a working area 130. The utility system component 110 also comprises a boundary control 114 configured to provide a signal in the form of an electric current to the boundary wire 112 so that current circulates around the boundary wire 112. In use, circulation of the current around the boundary wire loop 112 generates a magnetic field inside and outside the working area 130. In Figure 1 the current is shown circulating anticlockwise around the boundary wire loop 112.

The utility vehicle 180 is similar to known utility vehicles such as those disclosed in EP 3 225 454 A1. It is configured to move within and service the working area 130. The utility vehicle 180 shown in Figures 1 to 7 is a robotic lawnmower configured to autonomously navigate a lawn and cut the grass. The utility system may be used for other services and/or other working areas 130 such as e.g. parks, sports pitches and so on. The boundary wire 112 is buried around a periphery of the lawn during installation and setup of the utility system 100.

The utility vehicle 180 includes magnetic sensors and is configured to detect the magnetic field generated by the circulation of current around the boundary wire loop 112. When the utility vehicle 180 approaches the boundary wire loop 112 it detects corresponding changes in the magnetic field and hence determines the location of the boundary wire loop 112. According to convention, the magnetic field within the working area 130 is positive (since current circulates in the boundary wire loop in an anticlockwise direction in Figure 1) whereas the magnetic field outside the working area is negative.

The utility vehicle 180 is free to move about the working area 130 during servicing until such time as a predetermined condition is met e.g. the utility vehicle 180 has a lower than a predetermined threshold of power left, or certain time of day is reached, servicing of the working area 130 is completed, and so on. Upon satisfaction of the predetermined condition, the utility vehicle 180 is configured to seek out and dock with the charging system 120.

The charging system 120 comprises a charging station 122 for receiving and charging the utility vehicle 180. The charging system 120 also comprises a charging station wire loop 124. The utility system 100 is configured to provide a signal in the form of an electric current to the charging station wire loop 124 if and only if the charging station 122 is available to receive and charge the utility vehicle 180. A portion 126 of the charging station wire loop 124 is arranged adjacent a portion 116 of the boundary wire loop 112. The portion 126 is parallel to the portion 116 and may be less than 5 cm therefrom.

In Figure 1, electric current is shown circulating about the charging station wire loop 124 in an anticlockwise direction. The utility system 100 is therefore arranged so that electric current in the portion 126 of the charging station wire loop 124 flows in the opposite direction to electric current in the portion 116 of the boundary wire loop 112. The electric currents in the respective wire loops 112, 124 are configured to be equal and opposite. Consequently, the net flow of electric charge in the region of the portions 116 and 126 is negligible and therefore the magnetic field generated by the portions together is also negligible. This may be viewed as the magnetic field generated by the flow of current in the portion 116 of the boundary wire loop 112 substantially cancelling the magnetic field generated by the flow of current in the portion 126 of the charging station wire loop 124. Consequently, a utility vehicle 180 will not detect the portion 116 of the boundary wire loop 112 and may therefore access the charging station 122 for charging.

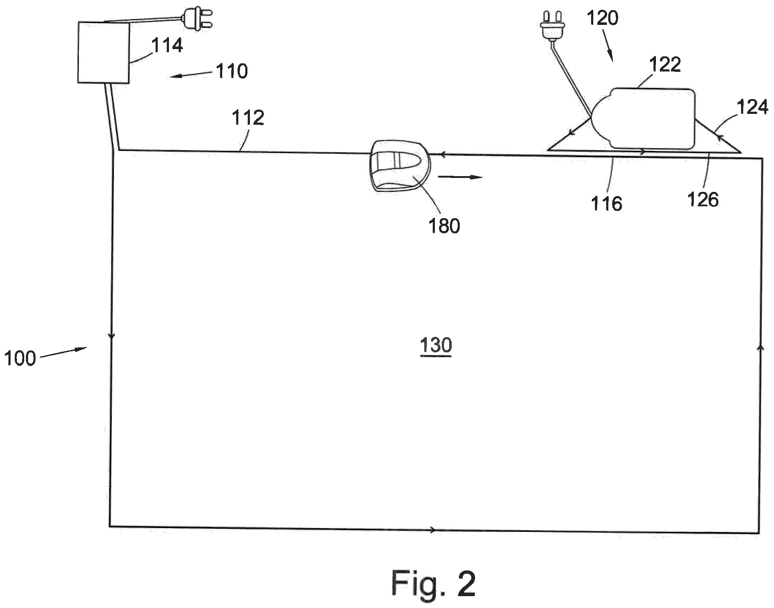

Figure 2 shows the utility system 100 shortly after the circumstance shown in Figure 1. In Figure 1 the utility vehicle 180 started to move towards the charging system 120. The utility vehicle 180 may store and hence recall the location of the charging system 120 (e.g. the last-used charging system 120). As it moves towards the charging system 120, utility vehicle 180 first encounters the boundary wire loop 112. The utility vehicle 180 is configured to trace along the boundary wire 112 in search of the charging system 120. The utility vehicle 180 therefore follows the boundary wire loop 112 as shown by the arrow in Figure 2.

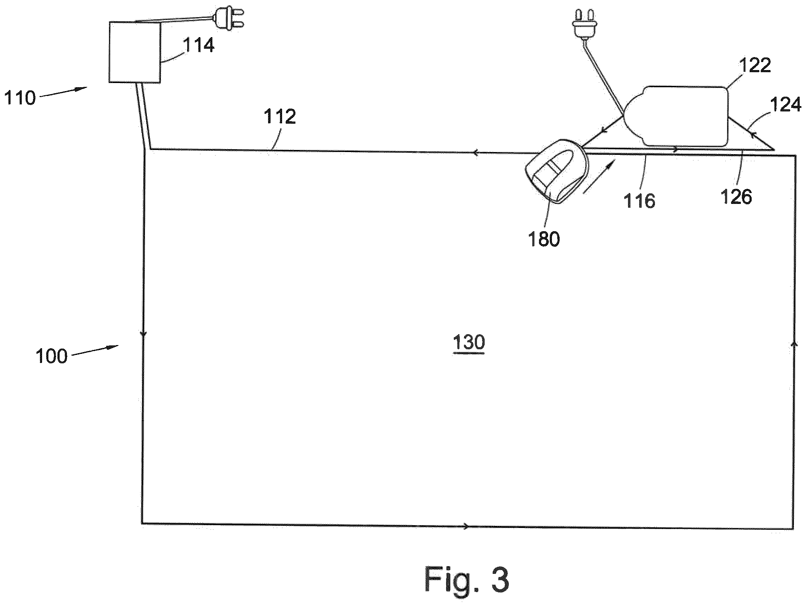

Figure 3 shows the utility system 100 of Figures 1 and 2 as the utility vehicle 180 reaches the charging system 120. Since the charging station 122 is available to receive and charge the utility vehicle 180, current is flowing around the charging station wire loop 124. As such, the magnetic field in the region of the portion 126 of the charging station wire loop 124 substantially cancels the magnetic field in the region of the portion 116 of the boundary wire loop 112 and the utility vehicle 180 does not detect the portion 116 of the boundary wire loop 112. The utility vehicle 180 therefore crosses the portion 116 of the boundary wire loop 112 and exits the working area 130 in order to access and dock with the charging station 122. Upon exiting the working area 130 the utility vehicle 180 gets close enough to the charging station 122 to detect its presence. The utility vehicle 180 is configured to navigate into and dock with a charging station 122 when it gets close enough. For example, the charging system 120 may comprise a docking wire (not shown) which is operable to generate another magnetic field, which magnetic field the utility vehicle 180 may detect and use to navigate to and dock with the charging station 122. The docking wire may be operable only when the charging station 122 is available to receive and charge a utility vehicle.

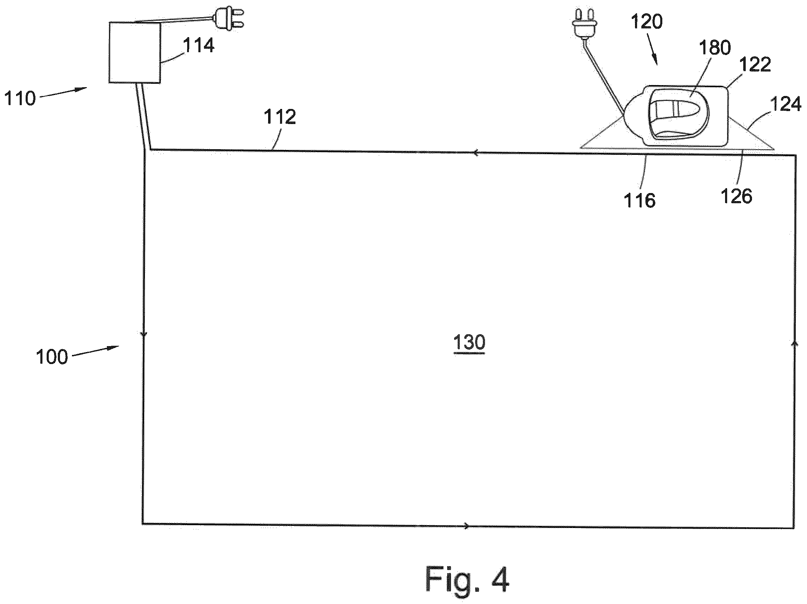

Figure 4 shows the utility system 100 of Figures 1 to 3 wherein the utility vehicle 180 is docked with the charging station 122. Since the charging station 122 is no longer available to receive and charge a utility vehicle 180 (i.e. it is already charging a utility vehicle 180) no electric current is provided to the charging station wire loop 124. Therefore nothing acts to substantially cancel the magnetic field in the region of portion 116 of the boundary wire loop 112.

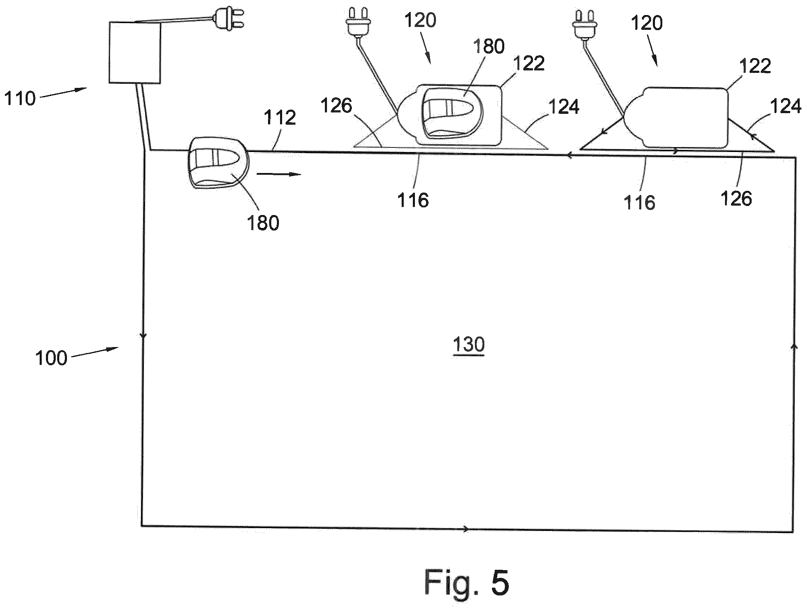

Figure 5 shows a utility system 100 comprising a plurality of utility vehicles 180 and a plurality of charging systems 120. The utility system 100 of Figure 5 comprises a single utility system component 110 comprising a single boundary wire loop 112.

Any suitable number of charging systems 120 may be incorporated into a utility system 100 to provide desired charging capability for utility vehicles 180 of the utility system 100.

A first utility vehicle 180 is shown in Figure 5 tracing the boundary wire loop 112 and seeking an available charging station 122. As can be seen from Figure 5, the moving utility vehicle 180 will first approach an occupied charging system 120 before it approaches an unoccupied and available charging system 120. However, since the first charging system 120 is occupied, no current is provided to the charging wire loop 124 of that system and hence the magnetic field in the region of the portion 116 of the boundary wire loop 112 adjacent the first charging system 120 is not cancelled. Therefore, the utility vehicle 180 will detect the portion 116 of the boundary wire loop 112 and will continue to navigate along the periphery of the boundary wire loop 112 past the first charging station 120. Further, the charging system 120 may comprise a docking wire which generates a magnetic field for guiding the utility vehicle 180 to dock with the charging station 122 if the charging system 120 is available to charge the utility vehicle 180. When the charging station 122 is occupied or otherwise not capable of receiving and charging the utility vehicle, the charging system may not provide an electrical current to the docking wire so that the docking wire does not generate a magnetic field and the utility vehicle 180 does not detect and dock with the charging station 122.

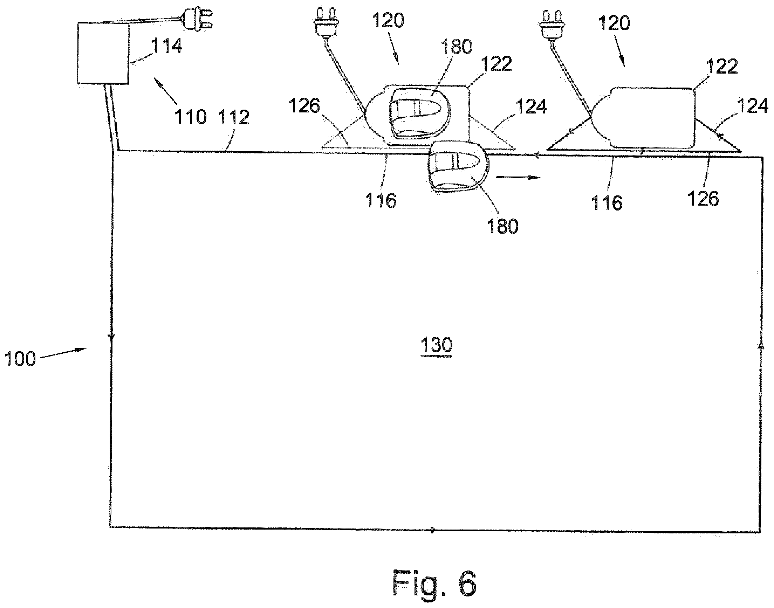

Figure 6 shows the utility system 100 of Figure 5 at a later point in time. The moving utility vehicle 180 detected the magnetic field from the portion 116 of the boundary wire loop 112 adjacent the first charging station 120 and hence continued to trace the boundary wire loop 112 and travel past the first charging system 120 because that system was unavailable. However as can be seen from Figure 6, a second available charging system 120 is disposed adjacent boundary wire loop 112 ahead of the moving utility vehicle 180. Because the charging station 122 of the available charging system 120 is ready to receive and charge a utility vehicle 180, electric current is provided to the charging station wire loop 124 of the charging system 120. Therefore the magnetic field in the region of the portion 116 of the boundary wire loop 112 is substantially cancelled by the magnetic field in the region of the portion 126 of the charging station wire loop 124, and the moving utility vehicle 180 will not detect the portion 116 of the boundary wire loop 112 as it approaches the available charging station 122. The utility vehicle 180 is therefore able to cross the portion 116 of the boundary wire loop 112 and exit the working area 130 in order to approach the available charging station 122. Upon approaching the charging station 122, the utility vehicle 180 detects the charging station 122 and navigates to and docks with the charging station 122. For example, the utility vehicle may detect a magnetic field generated by an electric current in a docking wire (not shown) of the charging system 120, and may navigate by that magnetic field to dock with the charging station 122.

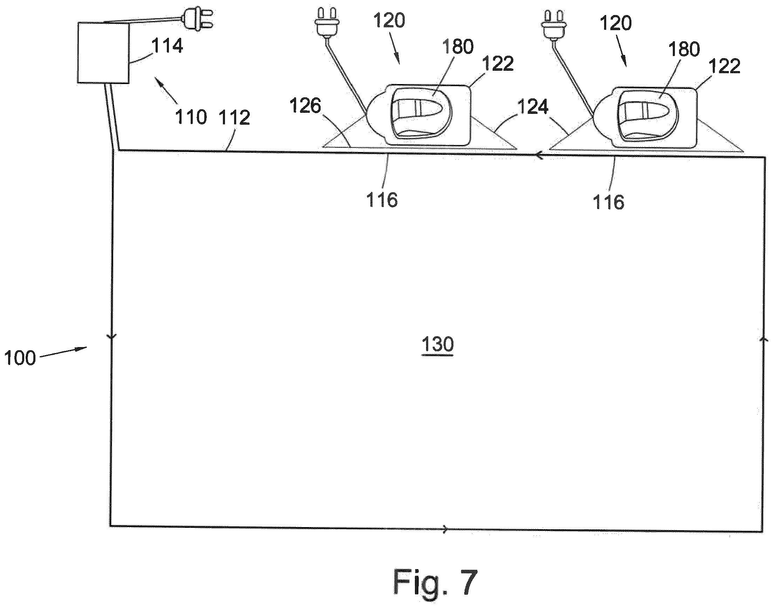

Figure 7 shows the utility system of Figures 5 and 6 at a later point in time. The moving utility vehicle 180 was able to cross portion 116 of the boundary wire loop 112 and therefore exit the working area 130 in order to access the charging station 122 that was available. Since the charging station 122 is no longer capable of receiving a utility vehicle 180 (i.e. it cannot charge another utility vehicle 180), no electric current is provided to the charging station wire loop 124.

In this way a plurality of utility vehicles 180 can be used to service a single working area 130. Servicing of the working area 130 may therefore be accomplished more quickly than was possible using known utility systems. During operation each utility vehicle 180 can operate autonomously and seek out a charging station 122 as needed. The arrangement of the boundary wire loop 112 and the charging station wire loops 124 of the respective charging systems 120 allows each utility vehicle 180 to access only those charging stations 122 that are available to receive it. A utility vehicle 180 will be prevented from encountering charging stations 122 that are not available for charging.

As can be seen from Figures 1 to 7 there is no charging station associated with the utility system component 110 and the boundary wire loop 112. That is, no charging station is provided electrically connected to the boundary wire loop 112. The boundary controller 114 may therefore be simplified compared to e.g. the charging systems. The boundary controller 114 may comprise a printed circuit board (PCB) and a power source such as a plug connector for connecting the utility system component to mains power. The utility system component 110 and each of the charging systems 120 are separate closed systems. Each may operate independently of the other and hence operation of the overall system may be simplified.

The utility system 100 provides increased functionality by allowing charging systems 120 and utility vehicles 180 to be added to the system as needed. For example, a user having a working area of a certain size may decide that the amount of time taken by a single utility vehicle 180 to service the working area 130 is acceptable. Another user might decide that the working area 130 should be serviced more quickly and hence may include one or more other utility vehicles and/or one or more charging station.

The embodiments of the invention enable servicing of working areas 130 which are larger than those that were previously feasible. For example, the grass of a football pitch or the like may be cut quickly enough using multiple utility vehicles 180. Upon completion of the service (or as otherwise needed), the utility vehicles 180 can exit the working area and dock at charging stations. The charging stations may be removed from the football pitch and hence may not be exposed to damage (e.g. during a football game) and may not be visible.

## Claims

1. A utility system comprising:
a boundary wire loop (112) arranged to carry an electric current and generate a first magnetic field, wherein the boundary wire loop defines a working area (130);
a utility vehicle (180) configured to move within the working area (130) and to detect magnetic fields to assist its navigation; and
a charging system (120) comprising:
a charging station (122) for receiving and charging the utility vehicle (180); and
a charging station wire loop (124) arranged to carry an electric current and generate a second magnetic field, wherein a portion (126) of the charging station wire loop (124) is disposed parallel and adjacent to a portion (116) of the boundary wire loop (112) such that when current flows in both wire loops (112, 124) the respective magnetic fields from the parallel
and adjacent portions (116, 126) are substantially cancelled;
wherein the charging system (120) is configured so that electric current is provided to the charging station wire loop (124) to generate the second magnetic field if the charging station (122) is capable of receiving and charging the utility vehicle (180) and wherein the utility vehicle (180) is configured to exit the working area in order to access the charging station (122) if during use the utility vehicle (180) does not detect a magnetic field in the region of the portion (116) of the boundary wire loop (112) adjacent the portion (126) of the charging station wire loop (124).

2. A utility system as claimed in claim 1, wherein the utility vehicle (180) is configured to approach the charging station (122) by tracing the boundary wire loop (112) by detecting the magnetic field generated thereby until it reaches the charging station (122).

3. A utility system as claimed in claim 1 or 2, wherein the utility vehicle (180) is configured to approach the charging station (122) when a predetermined condition is satisfied.

4. A utility system as claimed in claim 1, 2 or 3, comprising a plurality of utility vehicles (180).

5. A utility system as claimed in any preceding claim, comprising a plurality of charging systems (120).

6. A utility system as claimed in claim 5, comprising an equal number of utility vehicles (180) and charging systems (120).

7. A utility system as claimed in claim 5 or 6, wherein the plurality of charging systems (120) are spaced from each other around the boundary wire loop (112).

8. A utility system as claimed in any preceding claim, wherein the utility vehicle (180) is a lawn mower.

9. A utility system as claimed in any preceding claim, comprising a boundary controller (114) arranged to supply the electric current to the boundary wire loop (112) to generate the first magnetic field.

10. A method of charging a utility vehicle (180), comprising:
providing a boundary wire loop (112) arranged to carry an electric current, wherein the boundary wire loop (112) defines a working area (130);
providing a utility vehicle (180) configured to move within the working area (130) and to detect magnetic fields and navigate thereby;
providing a charging system (120) comprising:
a charging station (122) for receiving and charging the utility vehicle (180); and
a charging station wire loop (124) arranged to carry an electric current, wherein a portion (126) of the charging station wire loop (124) is disposed parallel and adjacent to a portion (116) of the boundary wire loop (112);
providing an electric current to the boundary wire loop (112) so as to generate a first magnetic field thereby;
providing an electric current to the charging station wire loop (124) so as to generate a second magnetic field thereby and substantially cancel the magnetic field in the region of the parallel and adjacent wire loop portions (116, 126) if the charging station (122) is capable of receiving and charging the utility vehicle (180),
wherein the utility vehicle (180) is configured to exit the working area in order to access the charging station (122) if during use the utility vehicle (180) does not detect a magnetic field in the region of the portion (116) of the boundary wire loop (112) adjacent the portion (126) of the charging station wire loop (124).

11. A method as claimed in claim 10, comprising controlling the utility vehicle (180) to approach the charging station (122) by tracing the boundary wire loop (112) by detecting the magnetic field generated thereby until it reaches the charging station (122).

12. A method as claimed in claim 10 or 11, comprising controlling the utility vehicle (180) to approach the charging station (122) when a predetermined condition is satisfied.

13. A method as claimed in claim 10, 11 or 12, comprising providing a plurality of utility vehicles (180).

14. A method as claimed in any of claims 10 to 13, comprising providing a plurality of charging systems (120).

15. A method as claimed in any of claims 10 to 14, comprising using a utility system (100) as claimed in any of claims 1 to 9.

## Patentansprüche

1. Versorgungssystem, umfassend:
eine Begrenzungsdrahtschleife (112), die angeordnet ist, um einen elektrischen Strom zu leiten und ein erstes Magnetfeld zu erzeugen, wobei die Begrenzungsdrahtschleife einen Arbeitsbereich (130) definiert;
ein Versorgungsfahrzeug (180), das ausgelegt ist, um sich innerhalb des Arbeitsbereichs (130) zu bewegen und Magnetfelder zu erkennen, um seine Navigation zu unterstützen; und
ein Ladesystem (120), das Folgendes umfasst:
eine Ladestation (122) zum Aufnehmen und Laden des Versorgungsfahrzeugs (180); und
eine Ladestationsdrahtschleife (124), die angeordnet ist, um einen elektrischen Strom zu leiten und ein zweites Magnetfeld zu erzeugen, wobei ein Abschnitt (126) der Ladestationsdrahtschleife (124) parallel und angrenzend zu einem Abschnitt (116) der Begrenzungsdrahtschleife (112) so angeordnet ist, dass, wenn Strom in beiden Drahtschleifen (112, 124) fließt, die jeweiligen Magnetfelder der parallelen und angrenzenden Abschnitte (116, 126) im Wesentlichen aufgehoben werden;
wobei das Ladesystem (120) so ausgelegt ist, dass elektrischer Strom für die Ladestationsdrahtschleife (124) bereitgestellt wird, um das zweite Magnetfeld zu erzeugen, wenn die Ladestation (122) zum Aufnehmen und Laden des Versorgungsfahrzeugs (180) fähig ist, und wobei das Versorgungsfahrzeug (180) ausgelegt ist, um den Arbeitsbereich zu verlassen, um zu der Ladestation (122) zu gelangen, wenn das Versorgungsfahrzeug (180) während der Verwendung kein Magnetfeld in der Region des Abschnitts (116) der Begrenzungsdrahtschleife (112), die zu dem Abschnitt (126) der Ladestationsdrahtschleife (124) angrenzend ist, erkennt.

2. Versorgungssystem nach Anspruch 1, wobei das Versorgungsfahrzeug (180) ausgelegt ist, um sich der Ladestation (122) durch Verfolgen der Begrenzungsdrahtschleife (112) durch Erkennen des dadurch erzeugten Magnetfelds zu nähern, bis es die Ladestation (122) erreicht.

3. Versorgungssystem nach Anspruch 1 oder 2, wobei das Versorgungsfahrzeug (180) ausgelegt ist, um sich der Ladestation (122) zu nähern, wenn eine vorbestimmte Bedingung erfüllt ist.

4. Versorgungssystem nach Anspruch 1, 2 oder 3, umfassend eine Vielzahl von Versorgungsfahrzeugen (180).

5. Versorgungssystem nach einem vorstehenden Anspruch, umfassend eine Vielzahl von Ladesystemen (120).

6. Versorgungssystem nach Anspruch 5, umfassend eine gleiche Anzahl von Versorgungsfahrzeugen (180) und Ladesystemen (120).

7. Versorgungssystem nach Anspruch 5 oder 6, wobei die Vielzahl von Ladesystemen (120) voneinander um die Begrenzungsdrahtschleife (112) herum beabstandet sind.

8. Versorgungssystem nach einem vorstehenden Anspruch, wobei das Versorgungsfahrzeug (180) ein Rasenmäher ist.

9. Versorgungssystem nach einem vorstehenden Anspruch, umfassend eine Begrenzungssteuereinheit (114), die angeordnet ist, um den elektrischen Strom an die Begrenzungsdrahtschleife (112) abzugeben, um das erste Magnetfeld zu erzeugen.

10. Verfahren zum Laden eines Versorgungsfahrzeugs (180), umfassend:
Bereitstellen einer Begrenzungsdrahtschleife (112), die angeordnet ist, um einen elektrischen Strom zu leiten, wobei die Begrenzungsdrahtschleife (112) einen Arbeitsbereich (130) definiert;
Bereitstellen eines Versorgungsfahrzeugs (180), das ausgelegt ist, um sich innerhalb des Arbeitsbereichs (130) zu bewegen und Magnetfelder zu erkennen und dadurch zu navigieren;
Bereitstellen eines Ladesystems (120), das Folgendes umfasst:
eine Ladestation (122) zum Aufnehmen und Laden des Versorgungsfahrzeugs (180); und
eine Ladestationsdrahtschleife (124), die angeordnet ist, um einen elektrischen Strom zu leiten, wobei ein Abschnitt (126) der Ladestationsdrahtschleife (124) parallel und angrenzend zu einem Abschnitt (116) der Begrenzungsdrahtschleife (112) angeordnet ist;
Bereitstellen eines elektrischen Stroms für die Begrenzungsdrahtschleife (112), um damit ein erstes Magnetfeld zu erzeugen;
Bereitstellen eines elektrischen Stroms für die Ladestationsdrahtschleife (124), um damit ein zweites Magnetfeld zu erzeugen und im Wesentlichen das Magnetfeld in der Region der parallelen und angrenzenden Drahtschleifenabschnitte (116, 126) aufzuheben, wenn die Ladestation (122) fähig ist zum Aufnehmen und Laden des Versorgungsfahrzeugs (180),
wobei das Versorgungsfahrzeug (180) ausgelegt ist, um den Arbeitsbereich zu verlassen, um zu der Ladestation (122) zu gelangen, wenn das Versorgungsfahrzeug (180) während der Verwendung kein Magnetfeld in der Region des Abschnitts (116) der Begrenzungsdrahtschleife (112), die zu dem Abschnitt (126) der Ladestationsdrahtschleife (124) angrenzend ist, erkennt.

11. Verfahren nach Anspruch 10, umfassend Steuern des Versorgungsfahrzeugs (180), damit es sich der Ladestation (122) durch Verfolgen der Begrenzungsdrahtschleife (112)
durch Erkennen des dadurch erzeugten Magnetfelds nähert, bis es die Ladestation (122) erreicht.

12. Verfahren nach Anspruch 10 oder 11, umfassend Steuern des Versorgungsfahrzeugs (180), damit es sich der Ladestation (122) nähert, wenn eine vorbestimmte Bedingung erfüllt ist.

13. Verfahren nach Anspruch 10, 11 oder 12, umfassend Bereitstellen einer Vielzahl von Versorgungsfahrzeugen (180).

14. Verfahren nach einem der Ansprüche 10 bis 13, umfassend Bereitstellen einer Vielzahl von Ladesystemen (120).

15. Verfahren nach einem der Ansprüche 10 bis 14, umfassend Verwenden eines Versorgungssystems (100) nach einem der Ansprüche 1 bis 9.

## Revendications

1. Système utilitaire comprenant :
une boucle de fil périphérique (112) agencée pour transporter un courant électrique et générer un premier champ magnétique, dans lequel la boucle de fil périphérique définit une zone de travail (130) ;
un véhicule utilitaire (180) configuré pour se déplacer dans la zone de travail (130) et pour détecter des champs magnétiques pour aider sa navigation ; et
un système de charge (120) comprenant :
une station de charge (122) pour recevoir et charger le véhicule utilitaire (180) ; et
une boucle de fil de station de charge (124) agencée pour transporter un courant électrique et générer un second champ magnétique, dans lequel une partie (126) de la boucle de fil de station de charge (124) est disposée parallèlement et adjacente à une partie (116) de la boucle de fil périphérique (112) de sorte que lorsque du courant circule dans les deux boucles de fil (112, 124), les champs magnétiques respectifs provenant des parties parallèles et adjacentes (116, 126) sont sensiblement annulés ;
dans lequel le système de charge (120) est configuré de sorte qu'un courant électrique est fourni à la boucle de fil de station de charge (124) pour générer le second champ magnétique si la station de charge (122) est capable de recevoir et de charger le véhicule utilitaire (180) et dans lequel le véhicule utilitaire (180) est configuré pour sortir de la zone de travail afin d'accéder à la station de charge (122) si en utilisation, le véhicule utilitaire (180) ne détecte pas un champ magnétique dans la région de la partie (116) de la boucle de fil périphérique (112) adjacente à la partie (126) de la boucle de fil de station de charge (124).

2. Système utilitaire selon la revendication 1, dans lequel le véhicule utilitaire (180) est configuré pour s'approcher de la station de charge (122) en traçant la boucle de fil périphérique (112) en détectant le champ magnétique ainsi généré jusqu'à ce qu'il atteigne la station de charge (122).

3. Système utilitaire selon la revendication 1 ou 2, dans lequel le véhicule utilitaire (180) est configuré pour s'approcher de la station de charge (122) lorsqu'une condition prédéterminée est satisfaite.

4. Système utilitaire selon la revendication 1, 2 ou 3, comprenant une pluralité de véhicules utilitaires (180).

5. Système utilitaire selon l'une quelconque des revendications précédentes, comprenant une pluralité de systèmes de charge (120).

6. Système utilitaire selon la revendication 5, comprenant un nombre égal de véhicules utilitaires (180) et de systèmes de charge (120).

7. Système utilitaire selon la revendication 5 ou 6, dans lequel la pluralité de systèmes de charge (120) sont espacés les uns des autres autour de la boucle de fil périphérique (112).

8. Système utilitaire selon l'une quelconque des revendications précédentes, dans lequel le véhicule utilitaire (180) est une tondeuse à gazon.

9. Système de distribution selon l'une quelconque des revendications précédentes, comprenant un dispositif de commande périphérique (114) agencé pour fournir le courant électrique à la boucle de fil périphérique (112) afin de générer le premier champ magnétique.

10. Procédé de charge d'un véhicule utilitaire (180), comprenant les étapes consistant à :
fournir une boucle de fil périphérique (112) agencée pour transporter un courant électrique, dans lequel la boucle de fil périphérique (112) définit une zone de travail (130) ;
fournir un véhicule utilitaire (180) configuré pour se déplacer dans la zone de travail (130) et pour détecter des champs magnétiques et naviguer ainsi ;
fournir un système de charge (120) comprenant :
une station de charge (122) pour recevoir et charger le véhicule utilitaire (180) ; et
une boucle de fil de station de charge (124) agencée pour transporter un courant électrique, dans lequel une partie (126) de la boucle de fil de station de charge (124) est disposée parallèlement et adjacente à une partie (116) de la boucle de fil périphérique (112) ;
fournir un courant électrique à la boucle de fil périphérique (112) de manière à générer ainsi un premier champ magnétique ;
fournir un courant électrique à la boucle de fil de station de charge (124) afin de générer ainsi un second champ magnétique et d'annuler sensiblement le champ magnétique dans la région des parties de boucle de fil parallèles et adjacentes (116, 126) si la station de charge (122) est capable de recevoir et charger le véhicule utilitaire (180),
dans lequel le véhicule utilitaire (180) est configuré pour sortir de la zone de travail afin d'accéder à la station de charge (122) si en utilisation, le véhicule utilitaire (180) ne détecte pas un champ magnétique dans la région de la partie (116) de la boucle de fil périphérique (112) adjacente à la partie (126) de la boucle de fil de station de charge (124).

11. Procédé selon la revendication 10, comprenant une commande du véhicule utilitaire (180) pour qu'il s'approche de la station de charge (122) en traçant la boucle de fil périphérique (112) en détectant le champ magnétique ainsi généré jusqu'à ce qu'il atteigne la station de charge (122).

12. Procédé selon la revendication 10 ou 11, comprenant une commande du véhicule utilitaire (180) pour qu'il s'approche de la station de charge (122) lorsqu'une condition prédéterminée est satisfaite.

13. Procédé selon la revendication 10, 11 ou 12, comprenant une fourniture d'une pluralité de véhicules utilitaires (180).

14. Procédé selon l'une quelconque des revendications 10 à 13, comprenant une fourniture d'une pluralité de systèmes de charge (120).

15. Procédé selon l'une quelconque des revendications 10 à 14, comprenant une utilisation d'un système utilitaire (100) selon l'une quelconque des revendications 1 à 9.
